# EUROPEAN PATENT APPLICATION

(11) **EP 3 919 602 A1**
(43) Date of publication of application: **08.12.2021**
(21) Application number: 19913935.3
(22) Date of filing: 31.01.2019
(51) Int. Cl.: C12C 5/02, A23L 2/00, A23L 2/52, C12C 7/00, C12G 3/04

(54) **BEER-TASTE BEVERAGE**

(71) Applicant: Suntory Holdings Limited, Osaka 530-8203 (JP)
(72) Inventor: ABE, Hiroyuki, Fuchu-shi, Tokyo (JP); INUI, Takako, Ibaraki-shi, Osaka (JP)
(74) Representative: Vossius & Partner Patentanwälte Rechtsanwälte mbB
(86) International application number: PCT/JP2019/003315
(87) International publication number: WO 2020/157891

(57) **Abstract**

A beer-taste beverage containing 3-mercaptohexan-1-ol (3MH), wherein the mass ratio of the content of 3MH to the content of an α-acid (3MH (ppt) / α-acid (ppm)) is 180 or more. According to the present invention, a beer-taste beverage having excellent flavors, capable of giving a rich, grapefruit-like aroma and having lowered disagreeable bitterness originated from hops can be provided.

## Description

### TECHNICAL FIELD

The present invention relates to a beer-taste beverage and a method for producing the same, and a hop processed product and a method for producing the same.

### BACKGROUND ART

With the diversification of the inclinations of the consumers in the recent years, the development of beer-taste beverages having various flavor characteristics has been desired. Hops which are used as raw materials for beer-taste beverages have been known to be useful in flavoring the beverages. For example, Patent Publication 1 discloses that heat-treated hops at high temperatures obtained by heat-treating hops or a hop processed product in the presence of overheated steam are added to an intermediary solution obtained in the process of producing a beer-taste beverage, and the like, in order to provide hop aromas with a lowered grassy smell.

### RELATED ART REFERENCES

### PATENT PUBLICATIONS

Patent Publication 1: Japanese Patent Laid-Open No. 2017-46670

### SUMMARY OF THE INVENTION

### PROBLEMS TO BE SOLVED BY THE INVENTION

However, in Patent Publication 1, the aroma ingredients having high volatilities are undesirably dissipated, so that it was made difficult to give hop aromas efficiently. In addition, when hops are used in a large amount in order to improve hop aromas, a low-quality bitterness originated from the hops was undesirably given.

An object of the present invention is to provide a beer-taste beverage capable of giving a rich, grapefruit-like aroma and having lowered disagreeable bitterness originated from hops and a method for producing the same. Another object is to provide a hop processed product capable of giving a rich, grapefruit-like aroma and having lowered disagreeable bitterness originated from hops and a method for producing the same.

### MEANS TO SOLVE THE PROBLEMS

The present invention relates to the following [1] to [4]:
[1] A beer-taste beverage containing 3-mercaptohexan-1-ol (3MH), wherein the mass ratio of the content of 3MH to the content of an α-acid (3MH (ppt) / α-acid (ppm)) is 180 or more.
[2] A method for producing a beer-taste beverage as defined in [1], including adding a hop processed product obtained by high-temperature-and-high-pressure-treating a hop-containing water under the conditions of from 130° to 160°C and 0.27 to 0.62 MPa to any of the steps in the production of the beer-taste beverage.
[3] A method for producing a hop processed product, including the step of high-temperature-and-high-pressure-treating a hop-containing water under the conditions of from 130° to 160°C and 0.27 to 0.62 MPa.
[4] A hop processed product obtained by a method for production as defined in [3].

### EFFECTS OF THE INVENTION

According to the present invention, a beer-taste beverage capable of giving a rich, grapefruit-like aroma and having lowered disagreeable bitterness originated from hops and a method for producing the same can be provided. In addition, a hop processed product capable of giving a rich, grapefruit-like aroma and having lowered disagreeable bitterness originated from hops and a method for producing the same can be provided.

### MODES FOR CARRYING OUT THE INVENTION

As a result of intensive studies in view of the above objects, the inventors of the present invention have found out that a beer-taste beverage capable of giving a rich, grapefruit-like aroma and having lowered disagreeable bitterness originated from hops is obtained by having a mass ratio of the content of 3-mercaptohexan-1-ol (3MH) to the content of an α-acid in the beer-taste beverage adjusted to a certain level or higher.

The beer-taste beverage of the present invention contains 3-mercaptohexan-1-ol (3MH). The 3MH is an ingredient having a grapefruit-like aroma, which is also contained in a general beer in an amount of from 0 to 50 ppt or so. The content of 3MH in the beer-taste beverage of the present invention is preferably 50 ppt or more, more preferably 75 ppt or more, even more preferably 100 ppt or more, even more preferably 125 ppt or more, even more preferably 150 ppt or more, even more preferably 175 ppt or more, and even more preferably 200 ppt or more, from the viewpoint of giving a rich, grapefruit-like aroma, and the content is preferably 1200 ppt or less, more preferably 1000 ppt or less, and even more preferably 800 ppt or less, from the viewpoint of the balance of aromas, and the content may be within the range of any combinations of those given above.

The α-acid is a bitterness ingredient contained in hops, which is considered to be one cause of disagreeable bitterness derived from the hops. The content of the α-acid in the beer-taste beverage of the present invention is not particularly limited so long as the mass ratio of the content of 3MH defined below to the content of the α-acid is satisfied, and the content is preferably 1.0 ppm or less, more preferably 0.8 ppm or less, even more preferably 0.5 ppm or less, and even more preferably 0 ppm, from the viewpoint of lowering the disagreeable bitterness originated from the hops.

In the beer-taste beverage of the present invention, from the viewpoint of giving a rich, grapefruit-like aroma and lowering the disagreeable bitterness originated from the hops, the mass ratio of the content of 3MH to the content of the α-acid, i.e. 3MH (ppt) / α-acid (ppm) is 180 or more, preferably 210 or more, more preferably 240 or more, even more preferably 270 or more, and even more preferably 300 or more, and the upper limit may be, but not particularly limited to, for example, 15000 or less, 12000 or less, 10000 or less, 8000 or less, and the like, and the mass ratio may be within the range of any combinations of those given above.

The beer-taste beverage of the present invention can further contain an iso-α acid. The content of the iso-α acid is, but not particularly limited to, preferably from 10 to 50 ppm.

The beer-taste beverage of the present invention can further contain 4-mercapto-4-methylpentan-2-one (4MMP). The 4MMP is an ingredient having a black currant (cassis)-like aroma, which is also contained in a general beer in an amount of from 0 to 5 ppt or so. The content of 4MMP in the beer-taste beverage of the present invention is preferably 4 ppt or more, more preferably 8 ppt or more, even more preferably 12 ppt or more, even more preferably 16 ppt or more, even more preferably 20 ppt or more, even more preferably 24 ppt or more, and even more preferably 28 ppt or more, from the viewpoint of giving a black currant-like aroma, and the content is preferably 700 ppt or less, more preferably 500 ppt or less, even more preferably 300 ppt or less, and even more preferably 250 ppt or less, from the viewpoint of the balance of aromas, and the content may be within the range of any combinations of those given above.

In the beer-taste beverage of the present invention, from the viewpoint of giving a black currant-like aroma and lowering the disagreeable bitterness originated from hops, the mass ratio of the content of 4MMP to the content of the α-acid, i.e. 4MMP (ppt) / α-acid (ppm) is preferably 4 or more, more preferably 12 or more, even more preferably 20 or more, even more preferably 28 or more, even more preferably 36 or more, even more preferably 44 or more, and even more preferably 52 or more, and the upper limit may be, but not particularly limited to, for example, 7000 or less, 5000 or less, 3500 or less, 2500 or less, and the like, and the mass ratio may be within the range of any combinations of those given above.

The method for producing a beer-taste beverage of the present invention includes, but not particularly limited to, a production method including adding a hop processed product in any one of the steps in the production of the beer-taste beverage. The majority of 3MH or 4MMP are present in the hops in a condition of precursor bound to peptides or amino acids, and metabolized with an yeast during the fermentation to be converted to a free thiol. The conversion efficiency in the production of the beer-taste beverage is usually as low as several percent or so. In the hop processed product usable in the production method of this embodiment, the conversion from a thiol precursor is accelerated by high-temperature, high-pressure treating the hops in an aqueous phase at 130°C or higher, whereby the 3MH and the 4MMP can be remarkably increased, and at the same time the isomerization of the α-acid is accelerated, whereby the disagreeable bitterness is lowered. Therefore, as the method for producing a beer-taste beverage of the present invention, an embodiment of adding a hop processed product mentioned above to a beer-taste beverage is preferably exemplified.

The hop processed product used in the production method of this embodiment can be obtained by high-temperature, high-pressure treating a hop-containing water containing hops and water under the conditions of preferably from 130° to 160°C and 0.27 to 0.62 MPa, and more preferably from 135° to 150°C and 0.31 to 0.48 MPa. The processing time is preferably 10 minutes or more, more preferably 15 minutes or more, and even more preferably 20 minutes or more, and the upper limit may be, but not particularly limited to, 90 minutes or less, 75 minutes or less, 60 minutes or less, and the like, and the processing time may be within the range of any combinations of those given above. In addition, as the hops used in the preparation of the hop processed product, varieties such as Amarillo, Apollo, Cascade, Saaz, Citra, Simcoe, Strisselspalt, Chinook, Tradition, Nugget, Nelson Sauvin, Hallertauer Blanc, and Perle, each containing a 3MH precursor ingredient can be used, from the viewpoint of obtaining 3MH. In a case where the hop processed product further contains 4MMP, a variety such as Citra containing a 4MH precursor ingredient may be used.

The content of the 3MH in the hop processed product used in the production method of this embodiment is preferably 250 ppt or more, more preferably 300 ppt or more, and even more preferably 500 ppt or more, from the viewpoint of giving a rich, grapefruit-like aroma, and the content is preferably 10000 ppt or less, more preferably 7500 ppt or less, and even more preferably 5000 ppt or less, from the viewpoint of the balance of aromas, and the content may be within the range of any combinations of those given above.

The content of the α-acid in the hop processed product used in the production method of this embodiment is preferably 100 ppm or less, more preferably 60 ppm or less, even more preferably 40 ppm or less, and even more preferably 0 ppm, from the viewpoint of lowering the disagreeable bitterness originated from the hops.

From the viewpoint of giving a rich, grapefruit-like aroma and lowering the disagreeable bitterness originated from hops, the mass ratio of the content of 3MH to the content of the α-acid, i.e. 3MH (ppt) / α-acid (ppm), in the hop processed product used in the production method of this embodiment is 5 or more, preferably 7.5 or more, more preferably 10 or more, and even more preferably 25 or more, and the upper limit may be, but not particularly limited to, for example, 200 or less, 150 or less, 125 or less, and the like, and the mass ratio may be within the range of any combinations of those given above.

The content of the 4MMP in the hop processed product used in the production method of this embodiment is preferably 500 ppt or more, more preferably 1000 ppt or more, and even more preferably 5000 ppt or more, from the viewpoint of giving a black currant-like aroma, and the content is preferably 10000 ppt or less, more preferably 9000 ppt or less, and even more preferably 8000 ppt or less, from the viewpoint of the balance of aromas, and the content may be within the range of any combinations of those given above.

In the production method of the present invention, the beer-taste beverage may be a beer-taste beverage containing an alcohol, or a nonalcoholic beer-taste beverage. The methods of production in each of the embodiments of adding a hop processed product in each case will be exemplified hereinbelow, without intending to limit the present invention to these embodiments.

One embodiment of the beer-taste beverage according to the present invention includes a beer-taste beverage containing an alcohol, which can be produced in the same manner as in general beer-taste beverages, except that a hop processed product is added during the production steps for a beer-taste beverage. In addition, the alcohol as used herein refers to ethanol, and the ethanol content, in terms of a volume ratio, is, but not particularly limited to, preferably from 1% to 10%. Further, the origin of the alcohol content contained in the beer-taste beverage is not limited to fermentation and non-fermentation. General production steps for a beer-taste beverage will be shown hereinbelow. A general beer-taste beverage is one in which malts are used or not used as raw materials, which can be produced in the following manner.

As to the beer-taste beverage containing an alcohol produced using malts as raw materials, first, to a mixture containing raw materials such as wheat such as malts, optionally other grains, starches, sugars, a bittering agent, or a colorant, and water is added an enzyme such as amylase optionally to carry out gelatinization or saccharification, and the mixture is then filtered, to provide a saccharified liquid. Hops, a bittering agent or the like is optionally added to the saccharified liquid, and a mixture is boiled, to remove solid contents such as coagulated proteins in a clearing tank. As a substitute for this saccharified liquid, hops may be added to a hot water added with a malt extract, and the mixture may be boiled. The hops may be mixed at any stage from the beginning of boiling to before the termination of storage (stored liquor). As the conditions in the saccharification step, the boiling step, the solid content removal step, and the like, known conditions may be used. As the conditions in the fermentation and storage steps, known conditions may be used. The fermentation liquid obtained is filtered, and a carbon dioxide gas is added to a filtrate obtained. Thereafter, a vessel is filled, and subjected to a sterilizing step, to obtain an intended beer-taste beverage. In each of the above steps, the hop processed product may be added in any steps up to filling. It is preferable that the hop processed product is added in the steps on or after the termination of boiling, from the viewpoint of inhibiting evaporation.

As to the beer-taste beverage containing an alcohol produced without using malts as raw materials, a liquid sugar containing a carbon source, a nitrogen source as an amino acid-containing material other than wheat or malts, hops, a pigment, and the like are mixed together with a hot water, to provide a liquid sugar-containing solution. The liquid sugar-containing solution is boiled. When hops are used as raw materials, the hops may be mixed with the liquid sugar-containing solution during boiling, not before the beginning of boiling. As a substitute for this saccharified liquid, hops may be added to a hot water added with an extract using raw materials other than malts, and a mixture may be boiled. The hops may be mixed at any stage from the beginning of boiling to before the termination of storage. As the conditions in the fermentation and storage steps, known conditions may be used. The fermentation liquid obtained is filtered, and a carbon dioxide gas is added to a filtrate obtained. Thereafter, a vessel is filled, and subjected to a sterilizing step, to obtain an intended beer-taste beverage. In each of the above steps, the hop processed product may be added in any steps up to filling. It is preferable that the hop processed product is added in the steps on or after the termination of boiling, from the viewpoint of inhibiting evaporation.

As to the beer-taste beverage which is non-fermented and contains an alcohol, the beer-taste beverage may be one in which an alcohol content of a final manufactured product is adjusted by adding an alcohol for raw materials and the like, irrespective of malts being used or unused. The alcohol for raw materials may be added in any steps from the saccharification step to the filling step. In each of the above steps, the hop processed product may be added in any steps up to filling. It is preferable that the hop processed product is added in the steps on or after the termination of boiling, from the viewpoint of inhibiting evaporation.

One embodiment of the beer-taste beverage according to the present invention includes nonalcoholic beer-taste beverages, which can be produced in the same manner as general nonalcoholic beer-taste beverages except that a hop processed product is added during the production steps of the beer-taste beverage. The general production steps for a non-fermented nonalcoholic beer-taste beverage will be shown as follows. A nonalcoholic beer-taste beverage such as a nonalcoholic beer can be easily produced by a method not having a fermentation step with an yeast. General non-fermented nonalcoholic beer-taste beverages are ones produced using malts as raw materials or ones without using them, and each can be produced as follows.

As to the nonalcoholic beer-taste beverage produced by using malts as raw materials, first, to a mixture containing raw materials such as wheat such as malts, optionally other grains, starches, sugars, a bittering agent, or a colorant, and water is added an enzyme such as amylase optionally to carry out gelatinization or saccharification, and the mixture is then filtered, to provide a saccharified liquid. Hops, a bittering agent or the like is optionally added to the saccharified liquid, and a mixture is boiled, to remove solid contents such as coagulated proteins in a clearing tank. As a substitute for this saccharified liquid, hops may be added to a hot water added with a malt extract, and a mixture may be boiled. The hops may be mixed at any stage from the beginning of boiling to before the termination of storage. As the conditions in the saccharification step, the boiling step, the solid content removal step, and the like, known conditions may be used. After boiling, the wort obtained is filtered, and a carbon dioxide gas is added to a filtrate obtained. Thereafter, a vessel is filled, and subjected to a sterilizing step, to obtain an intended nonalcoholic beer-taste beverage. In each of the above steps, the hop processed product may be added in any steps up to filling. It is preferable that the hop processed product is added immediately before the termination of boiling, from the viewpoint of inhibiting evaporation.

In the case of producing a nonalcoholic beer-taste beverage without using malts as raw materials, first, a liquid sugar containing a carbon source, a nitrogen source as an amino acid-containing material other than wheat or malts, hops, a pigment, and the like are mixed together with a hot water, to provide a liquid sugar-containing solution. The liquid sugar-containing solution is boiled. When hops are used as raw materials, the hops may be mixed with the liquid sugar-containing solution during boiling, not before the beginning of boiling. A carbon dioxide gas is added to the liquid sugar-containing solution after boiling. Thereafter, a vessel is filled, and subjected to a sterilizing step, to obtain an intended nonalcoholic beer-taste beverage. In each of the above steps, the hop processed product may be added in any steps up to filling. It is preferable that the hop processed product is added immediately before the termination of the boiling, from the viewpoint of inhibiting evaporation.

The term "beer-taste beverage" as used herein refers to a carbonated beverage having a beer-like flavor. In other words, the beer-taste beverage of the present specification embraces all the carbonated beverages having a beer flavor, unless specified otherwise. Among them, the term "nonalcoholic beer-taste beverage" refers to a beer-taste beverage having an alcoholicity of less than 1%, and preferably does not substantially contain an alcohol. The beverage of the embodiment that substantially does not contain an alcohol does not intend to exclude a beverage containing a very small amount of alcohol to an extent that is undetectable. A beverage of which alcoholicity would be rounded off to 0.0%, and especially a beverage of which alcoholicity is rounded off to 0.00%, is embraced in the nonalcoholic beer-taste beverage. The kinds of the beer-taste beverage of the present invention include, for example, nonalcoholic beer-taste beverages, beer-taste refreshing beverages, and the like. Here, the term "alcoholicity (alcohol content)" as used herein means the content of ethanol, but an aliphatic alcohol is not included therein.

The alcoholicity of the beer-taste beverage according to the present invention means a content (v/v%) of an alcoholic content of the beverage, and the alcoholicity can be measured by any of known methods. For example, the alcoholicity can be measured with an oscillating densitometer. Specifically, a sample in which a carbon dioxide gas is degassed from a beverage by filtration or ultrasonication is prepared, and the sample is distilled with direct flame, and a density of the distillated solution obtained is measured at 15°C, and the alcoholicity can be converted and obtained from "Table 2 Alcoholic Content and Density (15°C) and Specific Gravity (15/15°C) Conversion Table" which is an annex to Internal Revenue Bureau, Specified Analysis Method (2007 Internal Revenue Bureau Order No. 6, revised June 22, 2007). In a case of a low concentration with an alcoholicity of less than 1.0%, a commercially available alcohol measurement instrument or gas chromatography may be used.

An aliphatic alcohol may be added to the beer-taste beverage according to the present invention, from the viewpoint of giving a liquor-taste. The aliphatic alcohol is not particularly limited so long as it is a known one, and an aliphatic alcohol having 4 to 5 carbon atoms is preferred. In the present invention, preferred aliphatic alcohols include aliphatic alcohols having 4 carbon atoms such as 2-methyl-1-propanol and 1-butanol; and aliphatic alcohols having 5 carbon atoms such as 3-methyl-1-butanol, 1-pentanol, and 2-pentanol. These aliphatic alcohols can be used alone or in a combination of two or more kinds. The content of the aliphatic alcohol having 4 to 5 carbon atoms is preferably from 0.0002 to 0.0007% by mass, and more preferably from 0.0003 to 0.0006% by mass. In the present specification, the content of the aliphatic alcohol can be measured by using a headspace gas chromatography.

### (Calories)

Among the beer-taste beverages according to the present invention, it is desired that the nonalcoholic beer-taste beverage is low in calories, matching in the favor of low-calorie diets in the recent years. Therefore, the beer-taste beverage according to the present invention has the number of calories of preferably less than 5 kcal/100 mL, more preferably less than 4 kcal/100 mL, and even more preferably less than 3 kcal/100 mL.

The number of calories included in the beer-taste beverage according to the present invention is basically calculated in accordance with "Method and the like for Analyzing Nutrient Ingredients etc. in Nutritional Labelling Standards" published in association with the Health Promotion Act. In other words, in principle, the number of calories can be calculated as a total sum of the amount of the various nutrient ingredients quantified multiplied by an energy conversion coefficient of each ingredient (protein: 4 kcal/g, fat: 9 kcal/g, saccharide: 4 kcal/g, dietary fibers: 2 kcal/g, alcohol: 7 kcal/g, or organic acid: 3 kcal/g). For details, see "Method and the like for Analyzing Nutrient Ingredients etc. in Nutritional Labelling Standards."

Specific measurement methods for the amounts of each of nutrient ingredients contained in the beer-taste beverage according to the present invention may be carried out in accordance with various methods of analyses described in the Health Promotion Act, "Method and the like for Analyzing Nutrient Ingredients etc. in Nutritional Labelling Standards." Alternatively, if requested to Incorporated Foundation, Japan Food Research Laboratories, one can know the calories and/or each of amounts of nutrient ingredients.

### (Saccharides)

The saccharides contained in the beer-taste beverage according to the present invention refer to saccharides based on the Nutritional Labelling Standards for Foods (2003 Ministry of Health, Labour, and Welfare, Announcement No. 176). Specifically, the saccharides refer to a group of foods from which proteins, fats, dietary fibers, ashes, alcohols, and water are excluded. In addition, the amount of saccharides in the foods is calculated by deduction of the amounts of proteins, fats, dietary fibers, ashes, and water from the weight of the above foods. In this case, the amounts of proteins, fats, dietary fibers, ashes, and water are measured by a method set out in the Nutritional Labelling Standards. Specifically, the amount of proteins is measured by nitrogen quantification conversion method; the amount of fats is measured by an ether extraction method, a chloroform-methanol liquid mixture extraction method, a Gerber method, an acid decomposition method or a Roese-Gottlieb method; the amount of dietary fibers is measured by high-performance liquid chromatography or Prosky method; the amount of ashes is measured by a method of ashing with magnesium acetate, a direct ashing method, or a method of ashing with sulfuric acid; and the amount of water is measured by Karl-Fischer method, a method using a drying aid, a vacuum thermal drying method, an atmospheric thermal drying method, or a plastic film method.

It is desired that the beer-taste beverage according to the present invention is low in saccharides, matching in the favor of the low carbohydrate diet in the recent year. Therefore, the content of the saccharide of the beer-taste beverage according to the present invention is preferably less than 0.5 g/100 mL, more preferably 0.4 g/100 mL or less, and even more preferably 0.3 g/100 mL or less. In addition, the lower limit of the content is, but not particularly set, usually 0.1 g/100 mL or so, which may be, for example, 0.15 g/100 mL or more, and 0.2 g/100 mL or more.

### (Acidulant)

As the acidulant used in the beer-taste beverage according to the present invention, it is preferable to use one or more acids selected from the group consisting of citric acid, lactic acid, phosphoric acid, and malic acid. In addition, in the present invention, as an acid other than the above acids, succinic acid, tartaric acid, fumaric acid, glacial acetic acid or the like can be used. These acidulants can be used without limitations so long as the acidulants are accepted to be added to foods. In the present invention, it is preferable to use a combination of lactic acid from the viewpoint of appropriately giving a moderate sour taste, and phosphoric acid from the viewpoint of appropriately giving an sour taste with a slightly stimulating taste.

The content of the acidulant in the beer-taste beverage according to the present invention, calculated in terms of citric acid, is preferably 200 ppm or more, more preferably 550 ppm or more, and even more preferably 700 ppm or more, from the viewpoint of providing a beer-like taste, and the content is preferably 15000 ppm or less, more preferably 5500 ppm or less, and even more preferably 2000 ppm or less, from the viewpoint of acidity. Therefore, in the present invention, the content of the acidulant, calculated in terms of citric acid, includes preferred ranges such as from 200 ppm to 15000 ppm, preferably from 550 ppm to 5500 ppm, and more preferably from 700 ppm to 1500 ppm. Here, the amount calculated in terms of citric acid as used herein refers to an amount converted from an acidity of each of the acidulants on the basis of the acidity of citric acid. For example, the amount which is equivalent to 100 ppm of lactic acid, calculated in terms of citric acid, is 120 ppm, the amount which is equivalent to 100 ppm of phosphoric acid, calculated in terms of citric acid, is 200 ppm, and the amount which is equivalent to 100 ppm of malic acid, calculated in terms of citric acid, is 125 ppm.

The content of the acidulant in the beer-taste beverage refers to those calculated by analyzing with high-performance liquid chromatography (HPLC) or the like.

### (Hops)

In the beer-taste beverage according to the present invention, hops can be used as a part of the raw materials. Since the flavor tends to resemble beer, it is desired that hops are used in a part of the raw materials. When hops are used, usual pellet hops, powder hops or a hop extract used in the production of beer and the like can be appropriately selected and used in accordance with a desired flavor. In addition, hop working products such as isomerized hops and reduced hops may be used. The hops used in the beer-taste beverage according to the present invention embrace those products. Also, the amount of the hops is, but not particularly limited to, typically from 0.0001 to 1% by weight or so, based on the entire amount of the beverage.

### (Other Raw Materials)

In the beer-taste beverage according to present invention, other raw materials may be optionally used within the range that would not inhibit the effects of the present invention. For example, a sweetener (including a high-intensity sweetener), a bittering agent, a flavor (aromatic), an yeast extract, a colorant such as a caramel pigment, vegetable extracted saponin-based material such as soybean saponin or quillai saponin, a vegetable protein- and peptide-containing product such as maize or soybeans, a proteinaceous material such as bovine serum albumin, dietary fibers, a seasoning such as amino acids, or an antioxidant such as ascorbic acid can optionally be used within the range that would not inhibit the effects of the present invention.

Thus, a beer-taste beverage according to the present invention is obtained. The pH of the beer-taste beverage according to the present invention is from 3.0 to 5.0, preferably from 3.5 to 4.5, and more preferably 3.5 to 4.0, from the viewpoint of making the flavor of the beverage favorable.

### (Container-Packed Beverage)

The beer-taste beverage according to the present invention can be packed into a container. The shapes of the containers are not limited in any manners, and the beer-taste beverage can be packed into a tightly sealed container such as a glass bottle, a can, a barrel, or a plastic bottle, whereby a beverage contained in a container can be provided.

### EXAMPLES

The present invention will be specifically described hereinbelow by the Examples, without intending to limit the scope of the present invention to the following Examples.

### Test Example 1 - Sensory Test by Addition

To an unhopped beer (beer without using hops as a raw material) which was studied to be produced by the house were added an α-acid manufactured by SIGMA-ALDRICH and 3MH manufactured by Tokyo Chemical Industry Co., Ltd. so as to have a concentration each listed in Table 1, the mixture was well mixed, and a carbon dioxide gas pressure was adjusted, to produce each of the beer-taste beverages of Examples 1 to 7 and Comparative Examples 1 to 3.

### < Sensory Evaluations >

The flavors of each of the mixtures obtained were evaluated by sensory tests according to a scoring method. Five well-trained sensory evaluators were asked to evaluate for "quality of bitterness," "intensity of grapefruit aroma," "balance of aromas," and "overall evaluation" in a 5-point full score for each item. The criteria of the scoring are as follows. On the bases that "very highly tasted or tasted very good" was given a score of 5, "tasted or tasted good" a score of 4, "slightly tasted or tasted normal" a score of 3, "hardly tasted or faintly tasted bad" a score of 2, and "not tasted or tasted bad" a score of 1, a mean score of the evaluation scores was calculated. The evaluations were carried out in accordance with the following criteria based on the mean score. The results are shown in Table 1.
a score of 1 or more to a score of less than 2: X;
a score of 2 or more to a score of less than 3: △;
a score of 3 or more to a score of less than 4: O; and
a score of 4 or more to a score of 5 or less: ⊚.

[Table 1]

**Table 1**

| | | Comparative Examples | | | Examples | | | | | | |
|---|---|---|---|---|---|---|---|---|---|---|---|
| | | 1 | 2 | 3 | 1 | 2 | 3 | 4 | 5 | 6 | 7 |
| Amount | α-Acid, ppm | 3.0 | 1.5 | 1.5 | 1.0 | 0.5 | 0.3 | 0.1 | 0.1 | 0.1 | 0.1 |
| | 3MH, ppt | 100 | 100 | 200 | 200 | 200 | 200 | 200 | 400 | 800 | 1200 |
| | 3MH/ α-Acid, ppt/ppm | 33 | 67 | 133 | 200 | 400 | 666 | 2000 | 4000 | 8000 | 12000 |
| Sensory Evaluations | Quality of Bitterness | × | △ | △ | ○ | ⊚ | ⊚ | ⊚ | ⊚ | ⊚ | ⊚ |
| | Intensity of Grapefruit Aroma | △ | △ | ○ | ○ | ○ | ○ | ○ | ⊚ | ⊚ | ⊚ |
| | Balance of Aromas | ○ | ○ | ⊚ | ⊚ | ⊚ | ⊚ | ⊚ | ○ | ○ | △ |
| | Overall Evaluation | × | × | △ | ○ | ⊚ | ⊚ | ⊚ | ⊚ | ⊚ | △ |

As is clear from Table 1, it could be seen that the beer-taste beverages of Examples 1 to 7 were excellent in both "quality of bitterness" and "intensity of grapefruit aroma," in comparisons to Comparative Examples 1 to 3. Since Example 7 had considerably intensively been given with the aromas originated from 3MH, the evaluation would be undesirable in the aspect of "balance of aromas," as compared to those of the beer-taste beverages of Examples 1 to 6, which resulted in less advantage results as the overall evaluation, but it was within the acceptable range as the manufactured article.

### Test Example 2 - Beer Brewery

### < Production of Beer >

One-hundred liters of a filtered wort obtained by an ordinary method was heated to 98°C with a boiling kettle, and a hop processed product (variety: Amarillo, area of produce: U.S.A.) which was previously treated in a tightly closed vessel under conditions as listed in Table 2 was then added to the raw material solution so as to have an added concentration as listed in Table 2. After stirring for one minute, the mixture was subjected to whirlpool rest, and rapidly cooled, to prepare a cold wort. Thereafter, an yeast was added to allow fermentation, a mixture was filtered, and a carbon dioxide gas pressure was then adjusted, to produce each of beer-taste beverages of Examples 8 to 10. The same procedures as in Examples 8 to 10 were carried out except that the addition of an untreated hop was changed to the addition of the hop processed product, to produce a beer-taste beverage of Comparative Example 4. Here, the tightly closed vessel refers to a 5-L metallic pressure-resistant vessel, which could be completely stoppered during the treatment. In all cases, the hop-containing water was filled in an amount such that the volume of the hop-containing water before the treatment in the tightly closed vessel corresponds to from 50 to 90% by volume of the entire volume in the tightly closed vessel (spatial volume of from 50 to 10% by volume for the void portion). In addition, the analytical values for the "hop processed product" in Table 2 were a value after addition to the raw material solution, and the content of each ingredient in the hop processed product can be converted to a value shown within parenthesis.

### < Measurement of Amount of α-Acid >

The amount was quantified in accordance with a method as described in Method 7.7 of "Analytica-EBC" of the analytical method published by the EBC (European Brewery Convention), and a converted amount was calculated by defining the content of Comparative Example 1 as 1.

### < Measurement of Amount of 3MH >

The measurement was carried out in accordance with a method described in Journal of Chromatography A. 2016 Oct 14, 1468, 154-163.

### < Sensory Evaluations >

The flavors of the beers obtained were evaluated in accordance with the sensory tests according to a scoring method. Five well-trained sensory evaluators were asked to evaluate for "quality of bitterness," "intensity of grapefruit aroma," "balance of aromas," and "overall evaluation" in a 5-point full score. On the bases that "very highly tasted or tasted very good" was given a score of 5, "tasted or tasted good" a score of 4, "faintly tasted or tasted normal" a score of 3, "hardly tasted or slightly tasted bad" a score of 2, and "not tasted or tasted bad" a score of 1, a mean score of evaluated scores was calculated. The evaluations were made in accordance with the following criteria based on the mean score. The results are shown in Table 2.
a score of 1 or more to less than a score of 2: X;
a score of 2 or more to less than a score of 3: △;
a score of 3 or more to less than a score of 4: ○; and
a score of 4 or more to a score of 5 or less: ⊚.

[Table 2]

**Table 2**

| | | Comp. Ex. | Ex. | | |
|---|---|---|---|---|---|
| | | 4 | 8 | 9 | 10 |
| Treatment Conditions | Temperature, °C | ― | 130 | 135 | 140 |
| | Pressure, MPa | ― | 0.27 | 0.31 | 0.36 |
| | Time, minutes | ― | 15 | 30 | 30 |
| After Treatment | Temperature, °C | ― | 25 | 25 | 25 |
| Added Concentration, g/L | | 1.3 | 1.3 | 1.3 | 1.3 |
| Hop Processed Product | Amount of α-Acid, ppm | 38.6 | 10.8 (216) | 7.2 (144) | 2.3 (46) |
| | Amount of 3MH, ppt | 49.8 | 56.0 (1120) | 84.7 (1694) | 102.1 (2042) |
| | Ratio of 3MH/ α-Acid, ppt/ppm | 1.3 | 5.2 | 11.8 | 44.3 |
| Manufactured Article | Amount of α-Acid, ppm | 4.92 | 0.69 | 0.20 | 0.04 |
| | Amount of 3MH, ppt | 111.5 | 198.8 | 231.8 | 232.3 |
| | Ratio of 3MH/ α-Acid, ppt/ppm | 22.7 | 287 | 1159 | 6375 |
| Sensory Evaluations | Quality of Bitterness | △ | ○ | ⊚ | ⊚ |
| | Intensity of Grapefruit Aroma | △ | ○ | ⊚ | ⊚ |
| | Balance of Aromas | ○ | ○ | ○ | ○ |
| | Overall Evaluation | △ | ○ | ⊚ | ⊚ |

As is clear from Table 2, the beer-taste beverages of Examples 8 to 10 were excellent in the aspects of "quality of bitterness" and "intensity of grapefruit aroma," and resulted in a high score as the overall evaluation. Particularly in Examples 9 and 10, the tendencies were remarkable, and it was shown that the quality of bitterness and the intensity of grapefruit aroma could be improved by treatment at 135°C or higher. On the other hand, Comparative Example 4 which is a level in which non-treated hops were added was disadvantageous in the aspects of "quality of bitterness" and "intensity of grapefruit aroma," and resulted in unfavorable evaluations.

### Test Example 3 - Hop Processed Product

Raw materials of hops (variety: Citra, area of produce: U.S.A.) were added to a hot water at 95°C, and the mixture was stirred for 1 minute, and then allowed to stand for 30 minutes, to give a hop processed product of Preparation Example 1. In addition, raw materials of hops (variety: Citra, area of produce: U.S.A.) were mixed with water so as to have a concentration as listed in Table 3, and each of the mixtures obtained was treated under conditions listed in Table 3 using a tightly closed vessel, to give each of hop processed products of Preparation Examples 2 to 8. Each of the hop processed products of Preparation Examples 2 to 8 obtained was ice-cooled to a temperature listed in Table 3, and the ice-cooled hop processed product was added to a hot water at 95°C, so as to have an added concentration of hops equivalent to that of Preparation Example 1, and the mixture was stirred for 1 minute, and then allowed to stand for 30 minutes. Thereafter, the contents of each ingredient were measured in accordance with the following measurement method. The results are shown in Table 3. Here, a tightly closed vessel refers to a 150-ml metallic pressure-resistant vessel, which could be completely stoppered during the treatment. In all cases, the hop-containing water was filled in an amount such that the volume of the hop-containing water before the treatment in the tightly closed vessel corresponds to from 50 to 90% by volume (spatial volume of 50 to 10% by volume of the void portion) in the volume of the tightly closed vessel. In addition, the analytical values of the "hop processed products" in Table 3 list the values after adding the hops to hot water, and the contents of each ingredient in the hop processed product can be converted to the values also listed within parentheses.

[Table 3]

**Table 3**

| | | Preparation Examples | | | | | | | |
|---|---|---|---|---|---|---|---|---|---|
| | | 1 | 2 | 3 | 4 | 5 | 6 | 7 | 8 |
| Treatment Conditions of Hop-Containing Water | Treatment Conc., g/L | ― | 45 | 45 | 45 | 45 | 45 | 45 | 45 |
| | Temp., °C | ― | 120 | 130 | 135 | 135 | 135 | 140 | 150 |
| | Pressure, MPa | ― | 0.20 | 0.27 | 0.31 | 0.31 | 0.31 | 0.36 | 0.48 |
| | Time, minute | ― | 15 | 15 | 15 | 30 | 60 | 15 | 15 |
| After Treatment | Temp., °C | ― | 25 | 25 | 25 | 25 | 25 | 25 | 25 |
| Added Concentration, g/L | | 1.3 | 1.3 | 1.3 | 1.3 | 1.3 | 1.3 | 1.3 | 1.3 |
| Hop Processed Product | Amount of α-Acid, ppm | 29.3 | 3.0 (60) | 2.6 (52) | 2.5 (50) | 2.1 (42) | 1.0 (20) | 2.3 (46) | 0.7 (14) |
| | Amount of 3MH, ppt | 10.5 | 10.3 (206) | 13.6 (272) | 18.6 (372) | 17.2 (344) | 49.1 (982) | 27.9 (558) | 79.2 (1584) |
| | Ratio of 3MH/ α-Acid, ppt/ppm | 0.4 | 3.8 | 5.2 | 7.4 | 8.2 | 49.1 | 12.1 | 113.1 |

It is clear from Table 3 that the amount of 3MH is increased and the amount of α-acid is lowered by increasing the treatment temperature, from the comparisons of Preparation Examples 2, 3, 4, 7, and 8. In addition, it is clear that the amount of 3MH can be increased and the amount of α-acid in the processed product can be remarkably lowered by extending the treatment time, from the comparisons of Preparation Examples 4 to 6. As the hop extracts used in the production of the beer-taste beverage of the present invention, all of Preparation Examples 2 to 8 can be used, and it is especially preferable to use the hop extracts of Preparation Examples 6 to 8.

### Test Example 4- Sensory Evaluation by Addition

To an unhopped beer (beer without using hops as a raw material) which was studied to be produced by the house were added an α-acid manufactured by SIGMA-ALDRICH, 3MH manufactured by Tokyo Chemical Industry Co., Ltd., and 4MMP manufactured by ALFA AESAR so as to have a concentration each listed in Table 4, the mixture was well mixed, and a carbon dioxide gas pressure was adjusted, to produce each of the beer-taste beverages of Examples 11 to 18.

### < Sensory Evaluations >

The flavors of each of the mixtures obtained were evaluated by sensory tests according to a scoring method. Five well-trained sensory evaluators were asked to evaluate for "quality of bitterness," "intensity of grapefruit aroma," "intensity of black currant aroma," "balance of aromas," and "overall evaluation" in a 5-point full score for each item. The criteria of the scoring are as follows. On the bases that "very highly tasted or tasted very good" was given a score of 5, "tasted or tasted good" a score of 4, "faintly tasted or tasted normal" a score of 3, "hardly tasted or slightly tasted bad" a score of 2, and "not tasted or tasted bad" a score of 1, a mean score of the evaluation scores was calculated. The evaluations were carried out in accordance with the following criteria based on the mean score. The results are shown in Table 4.
a score of 1 or more to a score of less than 2: ×;
a score of 2 or more to a score of less than 3: △;
a score of 3 or more to a score of less than 4: ○; and
a score of 4 or more to a score of 5 or less: ⊚

[Table 4]

**Table 4**

| | | Examples | | | | | | | |
|---|---|---|---|---|---|---|---|---|---|
| | | 11 | 12 | 13 | 14 | 15 | 16 | 17 | 18 |
| Amount | α-Acid, ppm | 1.0 | 1.0 | 0.5 | 0.5 | 0.5 | 0.1 | 0.1 | 0.1 |
| | 3MH, ppt | 200 | 200 | 200 | 200 | 200 | 200 | 200 | 200 |
| | 3MH/ α-Acid, ppt/ppm | 200 | 200 | 400 | 400 | 400 | 2000 | 2000 | 2000 |
| | 4MMP, ppt | 0 | 10 | 10 | 25 | 100 | 100 | 250 | 500 |
| | 4MMP/ α-Acid, ppt/ppm | 0 | 10 | 20 | 50 | 200 | 1000 | 2500 | 5000 |
| Sensory Evaluations | Quality of Bitterness | ○ | ○ | ⊚ | ⊚ | ⊚ | ⊚ | ⊚ | ⊚ |
| | Intensity of Grapefruit Aroma | ○ | ⊚ | ⊚ | ⊚ | ⊚ | ⊚ | ⊚ | ⊚ |
| | Intensity of Black Currant Aroma | × | ○ | ○ | ○ | ⊚ | ⊚ | ⊚ | ⊚ |
| | Balance of Aromas | ⊚ | ⊚ | ⊚ | ⊚ | ⊚ | ⊚ | ○ | △ |
| | Overall Evaluation | ○ | ⊚ | ⊚ | ⊚ | ⊚ | ⊚ | ⊚ | △ |

As is clear from Table 4, the beer-taste beverages of Examples 12 to 18 each containing 4MMP were excellent in "quality of bitterness," "intensity of grapefruit aroma," and "intensity of black currant aroma." Since Example 18 had considerably intensively been given with the aromas originated from 4MMP, the evaluation would be undesirable in the aspect of "balance of aromas," as compared to those of the beer-taste beverages of Examples 12 to 17, which resulted in less advantage results as the overall evaluation, but it was within the acceptable range as the manufactured article.

### Test Example 5 - Beer Brewery

### < Production of Beer >

One-hundred liters of a filtered wort obtained by an ordinary method was heated to 98°C with a boiling kettle, and a hop processed product (variety: Amarillo, area of produce: U.S.A.) which was previously treated in a tightly closed vessel under conditions as listed in Table 5 was then added to the raw material solution so as to have an added concentration as listed in Table 5. After stirring for one minute, the mixture was subjected to whirlpool rest, and rapidly cooled, to prepare a cold wort. Thereafter, an yeast was added to allow fermentation, a mixture was filtered, and a carbon dioxide gas pressure was then adjusted, to produce a beer-taste beverage of Example 19. The same procedures as in Example 19 were carried out except that the hop variety Amarillo was replaced with Citra, to produce a beer-taste beverage of Example 20.

Here, the tightly closed vessel refers to a 5-L metallic pressure-resistant vessel, which could be completely stoppered during the treatment. In all cases, the hop-containing water was filled in an amount such that the volume of the hop-containing water before the treatment in the tightly closed vessel corresponds to from 50 to 90% by volume of the entire volume in the tightly closed vessel (spatial volume of from 50 to 10% by volume for the void portion).

### < Measurement of Amount of 4MMP >

The measurement was carried out in accordance with a method described in Anal Chim Acta. 2014 Apr 22, 821, 48-53.

### < Sensory Evaluations >

The flavors of the beers obtained were evaluated in accordance with the sensory tests according to a scoring method. Five well-trained sensory evaluators were asked to evaluate for "quality of bitterness," "intensity of grapefruit aroma," "intensity of black currant aroma," "balance of aromas," and "overall evaluation" in a 5-point full score. On the bases that "very highly tasted or tasted very good" was given a score of 5, "tasted or tasted good" a score of 4, "faintly tasted or tasted normal" a score of 3, "hardly tasted or slightly tasted bad" a score of 2, and "not tasted or tasted bad" a score of 1, a mean score of evaluated scores was calculated. The evaluations were made in accordance with the following criteria based on the mean score. The results are shown in Table 5.
a score of 1 or more to less than a score of 2: X;
a score of 2 or more to less than a score of 3: △;
a score of 3 or more to less than a score of 4: ○; and
a score of 4 or more to a score of 5 or less: ⊚.

[Table 5]

**Table 5**

| | | Examples | |
|---|---|---|---|
| | | 19 | 20 |
| Treatment Conditions | Temperature, °C | 135 | 135 |
| | Pressure, MPa | 0.31 | 0.31 |
| | Time, minutes | 30 | 30 |
| After Treatment | Temperature, °C | 25 | 25 |
| Added Concentration, g/L | | 1.3 | 1.3 |
| Manufactured Article | Amount of α-Acid, ppm | 0.06 | 0.12 |
| | Amount of 3MH, ppt | 176 | 211 |
| | Ratio of 3MH/α-Acid, ppt/ppm | 2933 | 1758 |
| | Amount of 4MMP, ppt | 0 | 10 |
| | Ratio of 4MMP/α-Acid, ppt/ppm | 0 | 83 |
| Sensory Evaluations | Quality of Bitterness | ⊚ | ⊚ |
| | Intensity of Grapefruit Aroma | ○ | ○ |
| | Intensity of Black Currant Aroma | × | ○ |
| | Balance of Aromas | ○ | ⊚ |
| | Overall Evaluation | ○ | ⊚ |

As is clear from Table 5, the black currant-like aroma is provided by providing 4MMP in Example 20, showing a more improved balance of flavors than Example 19, resulting in a high score as an overall evaluation.

### INDUSTRIAL APPLICABILITY

According to the present invention, a beer-taste beverage having excellent flavors, capable of giving a rich, grapefruit-like aroma and having lowered disagreeable bitterness originated from hops can be provided.

## Claims

1. A beer-taste beverage comprising 3-mercaptohexan-1-ol (3MH), wherein the mass ratio of the content of 3MH to the content of an α-acid (3MH (ppt) / α-acid (ppm)) is 180 or more.

2. The beer-taste beverage according to claim 1, wherein the content of 3MH is from 50 to 1200 ppt.

3. The beer-taste beverage according to claim 1 or 2, wherein the content of an α-acid is 1.0 ppm or less.

4. The beer-taste beverage according to any one of claims 1 to 3, further comprising 4-mercapto-4-methylpentan-2-one (4MMP).

5. The beer-taste beverage according to claim 4, wherein the mass ratio of the content of 4MMP to the content of an α-acid (4MMP (ppt) / α-acid (ppm)) is 10 or more.

6. The beer-taste beverage according to claim 4 or 5, wherein the content of 4MMP is from 4 to 700 ppt.

7. A method for producing a beer-taste beverage as defined in any one of claims 1 to 6, comprising adding a hop processed product obtained by high-temperature-and-high-pressure-treating a hop-containing water under the conditions of from 130° to 160°C and 0.27 to 0.62 MPa to any of the steps in the production of the beer-taste beverage.

8. The method for production according to claim 7, wherein the hops used in the preparation of the hop processed product comprise one or more varieties selected from the group consisting of Amarillo, Apollo, Cascade, Saaz, Citra, Simcoe, Strisselspalt, Chinook, Tradition, Nugget, Nelson Sauvin, Hallertauer Blanc, and Perle.

9. A method for producing a hop processed product, comprising the step of high-temperature-and-high-pressure-treating a hop-containing water under the conditions of from 130° to 160°C and 0.27 to 0.62 MPa.

10. A hop processed product obtained by a method for production as defined in claim 9.
